(19) **Europäisches Patentamt / European Patent Office / Office européen des brevets**

(11) **EP 4 152 438 B1**

(12) **EUROPEAN PATENT SPECIFICATION**

(45) Date of publication and mention
of the grant of the patent:
**20.08.2025 Bulletin 2025/34**

(21) Application number: **21915795.5**

(22) Date of filing: **28.12.2021**

(51) International Patent Classification (IPC):
$H01M\ 4/131^{(2010.01)}$   $H01M\ 4/133^{(2010.01)}$
$H01M\ 4/36^{(2006.01)}$   $H01M\ 4/525^{(2010.01)}$
$H01M\ 4/587^{(2010.01)}$   $H01M\ 10/0525^{(2010.01)}$
$H01M\ 4/62^{(2006.01)}$

(52) Cooperative Patent Classification (CPC):
**H01M 4/587; H01M 4/131; H01M 4/133;
H01M 4/364; H01M 4/366; H01M 4/525;
H01M 10/0525; H01M 4/62; H01M 4/625;
Y02E 60/10**

(86) International application number:
**PCT/KR2021/020089**

(87) International publication number:
**WO 2022/145997 (07.07.2022 Gazette 2022/27)**

(54) **SECONDARY BATTERY**

SEKUNDÄRBATTERIE

BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2020 KR 20200185310**

(43) Date of publication of application:
**22.03.2023 Bulletin 2023/12**

(73) Proprietor: **LG Energy Solution, Ltd.
Seoul 07335 (KR)**

(72) Inventors:
- **WANG, Wen Xiu
  Daejeon 34122 (KR)**
- **JUNG, Do-Hwa
  Daejeon 34122 (KR)**
- **KWON, Do-Yeon
  Daejeon 34122 (KR)**
- **KIM, Min-Gyu
  Daejeon 34122 (KR)**
- **KIM, Sung-Hwan
  Daejeon 34122 (KR)**
- **KIM, Tae-In
  Daejeon 34122 (KR)**
- **NOH, Tae-Gyun
  Daejeon 34122 (KR)**
- **PARK, Sung-Bin
  Daejeon 34122 (KR)**
- **PARK, Seung-Hark
  Daejeon 34122 (KR)**

(74) Representative: **Hoffmann Eitle
Patent- und Rechtsanwälte PartmbB
Arabellastraße 30
81925 München (DE)**

(56) References cited:
**WO-A1-2016/129629**    **WO-A1-2016/129629**
**CN-A- 101 777 647**    **JP-A- 2009 164 082**
**KR-A- 20180 002 055**    **KR-A- 20200 073 801**
**KR-A- 20200 073 801**    **KR-A- 20200 092 202**
**KR-A- 20200 092 202**

- Y. TAKAHASHI ET AL: "Development of Lithium-Ion Batteries with a LiCoO[sub 2] Cathode Toward High Capacity by Elevating Charging Potential", JOURNAL OF THE ELECTROCHEMICAL SOCIETY, vol. 155, no. 7, 20 May 2008 (2008-05-20), pages A537, XP055330047, ISSN: 0013-4651, DOI: 10.1149/1.2916685

**Description**

TECHNICAL FIELD

The present disclosure relates to a secondary battery having improve life characteristics.

BACKGROUND ART

As technical development and needs for mobile instruments have been increased, secondary batteries that is rechargeable and can be downsized and provided with high capacity have been increasingly in demand. In addition, among such secondary batteries, lithium secondary batteries having high energy density and operating voltage have been commercialized and used widely.

A lithium secondary battery has a structure including an electrode assembly having a positive electrode and a negative electrode, each of which includes an active material coated on an electrode current collector, and a porous separator interposed between both electrodes; and a lithium salt-containing electrolyte injected to the electrode assembly. The electrode is obtained by applying a slurry including an active material, a binder and a conductive material dispersed in a solvent to a current collector, followed by drying and pressing.

In general, a secondary battery includes a positive electrode, a negative electrode, an electrolyte and a separator.

The negative electrode includes a negative electrode active material capable of intercalation/deintercalation of lithium ions released from the positive electrode. For example, a graphite-based active material, such as a natural graphite or an artificial graphite, may be used as a negative electrode active material.

An artificial graphite is used frequently in the form of secondary particles. For this purpose, in general, cokes as a raw material of primary particles are granulated to form secondary particles, and then graphitization is carried out through heat treatment to provide an artificial graphite in the form of secondary particles.

However, when using such a conventional process in which the size of primary particles is not controlled, a non-granulated micropowder or a micropowder separated from the secondary particles even after the granulation is generated in a large amount. Therefore, the resultant negative electrode shows reduced negative electrode adhesion (resistance against detachment of the negative electrode active material particles from the negative electrode), and the battery may provide poor high-temperature storage performance. In addition, since the secondary particles include a micropowder, the negative electrode has non-uniform pores and shows increased pore resistance, resulting in degradation of the life characteristics and quick charging performance of a battery.

Meanwhile, as a positive electrode active material of a secondary battery, a lithium cobalt oxide ($LiCoO_2$), a ternary positive electrode active material (NMC/NCA), $LiMnO_4$, $LiFePO_4$, or the like, is used. Particularly, in the case of $LiCoO_2$, it uses expensive cobalt and shows a lower capacity at the same voltage, as compared to a ternary positive electrode active material. Therefore, use of such a ternary positive electrode active material has been increased gradually in order to provide a secondary battery with high capacity.

However, in the case of $LiCoO_2$, it shows excellent overall physical properties, such as high pressing density, and excellent electrochemical characteristics, such as high cycle characteristics, and thus has been used frequently to date. However, $LiCoO_2$ shows a low charge/discharge current of about 150 mAh/g and has an unstable crystal structure at a voltage of 4.3 V or higher to cause the problem of rapid degradation of life characteristics, and has a risk of ignition caused by the reaction with an electrolyte.

Particularly, when applying high voltage to develop a high-capacity secondary battery, use of Li in $LiCoO_2$ is increased, and thus a risk of surface instability and structural instability is increased.

Therefore, there is still a need for developing a technology of improving the life characteristics of a secondary battery, while utilizing excellent characteristics of an artificial graphite as a negative electrode active material and a lithium cobalt oxide ($LiCoO_2$) as a positive electrode active material.

CN 101 777 647 A describes a method for preparing a lithium ion battery surface clad anode material, which comprises the steps of: (1) adding one or more salt compounds containing metal M into a solvent for hydrolysis to obtain a hydrolysate, wherein when M is Mg, Zn, n=1; when M is Al, Ce, La, n=1.5; and when M is Si, Sn, Ti, or Zr, n=2; (2) adding a lithium-containing anode active material into the hydrolysate, fully stirring the mixture, regulating pH value, and making a hydrolysis product $M(OH)_{2n}$ deposited and uniformly adsorbed on the surface of the lithium-containing anode active material; (3) drying the lithium-containing anode active material adsorbed with the hydrolysis product $M(OH)_{2n}$; and (4) roasting the dried lithium-containing anode active material of which the surface is adsorbed with the hydrolysis product $M(OH)_{2n}$ to form the anode active material clad by a metallic oxide $MO_n$.

KR 2020 0092202 A describes a lithium secondary battery that includes: a positive electrode including a first lithium cobalt oxide and a second lithium cobalt oxide having different average particle diameters (D50), and including a bimodal lithium cobalt oxide doped with aluminum; a negative electrode including bimodal graphite including first graphite and second graphite having different average particle diameters (D50); and a first additive which is a nitrile-based compound, wherein the first lithium cobalt oxide and the second lithium cobalt oxide contain 2500 ppm to 4000 ppm of aluminum.

KR 2020 0073801 A describes a negative electrode that includes: a current collector; and a negative active material layer disposed on the current collector. The negative active material layer includes: a second negative active material layer disposed on the current collector and including second negative active material particles; and a first negative active material layer disposed between the current collector and the second negative active material layer and including first negative active material particles. The second negative active material particles include a core and a carbon coating layer disposed on the core. The core is a secondary particle formed by agglomerating primary particles. The primary particles include artificial graphite, and the porosity of the first negative active material layer is 25.5% to 30%. The negative electrode satisfies 2% ≤ B-A ≤ 7.7% where A is porosity of the first negative active material layer, B is porosity of the second negative active material layer, and units of A and B are %.

WO 2016/129629 A1 describes a non-aqueous secondary cell characterized in having a positive electrode, a negative electrode, a separator, and a non-aqueous electrolyte; a positive electrode material in which the surfaces of positive electrode active material particles are coated with an Al-containing oxide being used in the positive electrode; the average coating thickness of the Al-containing oxide being 5-50 nm; the positive electrode material containing at least a positive electrode material (a) having an average particle diameter of 1-40 $\mu$m and a positive electrode material (b) that has an average particle diameter of 1-40 $\mu$m, the average particle diameter being smaller than that of the positive electrode material (a); the positive electrode material having a specific surface area of 0.1-0.42 m$^2$/g; the positive electrode active material contained in the positive electrode material (a) and the positive electrode active material contained in the positive electrode material (b) both being lithium cobaltate having a specific composition; and the non-aqueous electrolyte containing a fluorine-containing lithium salt.

DISCLOSURE

Technical Problem

The present disclosure is designed to solve the problems of the related art, and therefore the present disclosure is directed to providing a secondary battery having improved life characteristics.

Technical Solution

In one aspect of the present disclosure, there is provided a secondary battery according to any one of the following embodiments.

According to the first embodiment, there is provided a secondary battery including a positive electrode, a negative electrode and a separator interposed between the positive electrode and the negative electrode,

wherein the positive electrode includes a positive electrode current collector, and a positive electrode active material layer disposed on the positive electrode current collector and containing a positive electrode active material and a binder,
the positive electrode active material includes a lithium cobalt oxide,
the lithium cobalt oxide has a bimodal shape of average particle diameter distribution including two types of particles having a different average particle diameter,
the lithium cobalt oxide includes Al doping and is surface-coated with Zr,
the negative electrode includes a negative electrode current collector, and a negative electrode active material layer disposed on the negative electrode current collector and containing a negative electrode active material and a binder, and
the negative electrode active material includes a first negative electrode active material that is an artificial graphite having no carbon coating layer on the surface thereof, and a second negative electrode active material that is an artificial graphite having a carbon coating layer on the surface thereof.

According to a second embodiment, the lithium cobalt oxide includes large particles having an average particle diameter of 11-30 $\mu$m and small particles having an average particle diameter of 1-10 $\mu$m.

According to a third embodiment, the content of Al doped to the lithium cobalt oxide is 1,000-10,000 ppm.

According to a fourth embodiment, the content of Zr coated on the surface of the lithium cobalt oxide is 1-5,000 ppm.

According to a fifth embodiment, the weight ratio of the first negative electrode active material to the second negative electrode active material is 1:99-99:1.

According to a sixth embodiment, the negative electrode active material layer is a single layer including the first negative electrode active material and the second negative electrode active material.

According to a seventh embodiment, the negative electrode active material layer is a dual layer including a lower layer region containing the first negative electrode active material, and an upper layer region disposed on the lower layer region and containing the second negative electrode active material.

According to an eighth embodiment, the carbon coating layer is present in an amount of 0.5-10.0 wt% based on the total weight of artificial graphite having the carbon coating layer.

Advantageous Effects

According to an embodiment of the present disclosure, an artificial graphite and a lithium cobalt oxide (LiCoO$_2$), used conventionally as a typical negative electrode active material and positive electrode active material, respectively, are used, with the proviso that a negative electrode using non-coated artificial graphite in combination with carbon-coated artificial graphite as a negative electrode active material, and a positive electrode including a positive electrode active material containing a lithium cobalt oxide doped with a predetermined amount of Al, coated with Zr and having a bimodal-type particle diameter distribution with different average particle diameters are provided at the same time in order to improve the problems of such conventional electrode active materials. In this manner, it is possible to improve the durability of the positive electrode active material to reduce the cell diffusion resistance, i.e. resistance generated upon the conduction of lithium ions, and thus to provide a secondary battery with significantly improved life characteristics and excellent quick charging performance.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a graph illustrating the capacity retention of the lithium secondary battery according to each of Example 1 and Comparative Examples 1 and 2.

FIG. 2 is a graph illustrating the capacity retention of the lithium secondary battery according to each of Example 2 and Comparative Examples 3 and 4.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

**In** one aspect of the present disclosure, there is provided a secondary battery including a positive electrode, a negative electrode and a separator interposed between the positive electrode and the negative electrode,

wherein the positive electrode includes a positive electrode current collector, and a positive electrode active material layer disposed on the positive electrode current collector and containing a positive electrode active material and a binder,

the positive electrode active material includes a lithium cobalt oxide,

the lithium cobalt oxide has a bimodal shape of average particle diameter distribution including two types of particles having a different average particle diameter,

the lithium cobalt oxide includes 5,000 ppm or more of Al doping and is surface-coated with Zr,

the negative electrode includes a negative electrode current collector, and a negative electrode active material layer disposed on the negative electrode current collector and containing a negative electrode active material and a binder, and

the negative electrode active material includes a first negative electrode active material that is an artificial graphite having no carbon coating layer on the surface thereof, and a second negative electrode active material that is an artificial graphite having a carbon coating layer on the surface thereof.

An artificial graphite as a negative electrode active material of a secondary battery is prepared by mixing cokes with a binder and firing and heating the resultant mixture at a high temperature of 2,500°C or higher, and thus is provided with crystallinity increased intentionally during the preparation and shows a constant and stable internal structure. As compared to a natural graphite, an artificial graphite does not allow intercalation of a larger amount of lithium ions, but provides relatively longer charge/discharge life.

However, an artificial graphite is used frequently in the form of secondary particles. For this purpose, in general, cokes as a raw material of primary particles are granulated to form secondary particles, and then graphitization is carried out through heat treatment to provide an artificial graphite in the form of secondary particles.

However, when using such a conventional process in which the size of primary particles is not controlled, a non-granulated micropowder or a micropowder separated from the secondary particles even after the granulation is generated in a large amount. Therefore, the resultant negative electrode shows reduced negative electrode adhesion (resistance against detachment of the negative electrode active material particles from the negative electrode), and the battery may provide poor high-temperature storage performance. In addition, since the secondary particles include a micropowder, the negative electrode has non-uniform pores and shows increased pore resistance, resulting in degradation of the quick charging performance of a battery. According to the related art, there has been used a process for forming a carbon coating layer on the secondary particles in order to solve the above-mentioned problems.

According to the present disclosure, the secondary battery includes a negative electrode active material including an artificial graphite having no carbon coating layer on the surface thereof, as a first negative electrode active material, and an artificial graphite having a carbon coating layer on the surface thereof, as a second negative electrode active material.

As compared to the negative electrode active material including an artificial graphite having no carbon coating layer on the surface thereof or an artificial graphite having a carbon coating layer on the surface thereof, alone, the negative electrode active material using an artificial graphite having no carbon coating layer on the surface thereof, as a first negative electrode active material, and an artificial graphite having a carbon coating layer on the surface thereof, as a second negative electrode active material, at the same time according to the present disclosure shows reduced cell diffusion resistance, and thus provides a secondary battery with significantly improved life characteristics and improved quick charging performance.

Herein, in general, an artificial graphite may be prepared by carbonizing a raw material, such as coal tar, coal tar pitch, petroleum-based heavy oil, or the like, at a temperature of 2,500°C or higher. After such graphitization, the resultant product is subjected to particle size adjustment, such as pulverization and secondary particle formation, so that it may be used as a negative electrode active material. An artificial graphite includes crystals distributed randomly in particles, has a lower sphericity as compared to a natural graphite and a slightly sharp shape.

The artificial graphite used according to an embodiment of the present disclosure includes commercially available mesophase carbon microbeads (MCMBs), mesophase pitch-based carbon fibers (MPCFs), a block-like graphitized artificial graphite, a powder-like graphitized artificial graphite, or the like, and may be an artificial graphite having a sphericity of 0.91 or less, preferably 0.6-0.91, and more preferably 0.7-0.9.

The first negative electrode active material, i.e. secondary particles of artificial graphite having no carbon coating layer may be formed by granulation of primary particles. In other words, the secondary particles may be formed by agglomeration of primary particles through a granulation process.

The second negative electrode active material may include a carbon coating layer on the surfaces of secondary particles, wherein the carbon coating layer may include at least one of an amorphous carbon and a crystalline carbon.

The crystalline carbon may further improve the conductivity of the negative electrode active material. The crystalline carbon may include at least one selected from the group consisting of fullerene, carbon nanotubes and graphene.

The amorphous carbon maintains the strength of the coating layer suitably to improve the output characteristics and quick charging performance of a natural graphite. The amorphous carbon may be a carbide of at least one selected from the group consisting of tar, pitch and other organic materials, or a carbonaceous material formed by using a hydrocarbon as a source for a chemical vapor deposition process.

The carbides of other organic materials may include a carbide of an organic material selected from carbides of sucrose, glucose, galactose, fructose, lactose, mannose, ribose, aldohexose, ketohexose and combinations thereof.

The hydrocarbon may be a substituted or non-substituted aliphatic or alicyclic hydrocarbon, or a substituted or non-substituted aromatic hydrocarbon. The substituted or non-substituted aliphatic or aliphatic hydrocarbon may include methane, ethane, ethylene, acetylene, propane, butane, butene, pentane, isobutane or hexane. The substituted or non-substituted aromatic hydrocarbon may include benzene, toluene, xylene, styrene, ethylbenzene, diphenylmethane, naphthalene, phenol, cresol, nitrobenzene, chlorobenzene, indene, coumarone, pyridine, anthracene or phenanthrene.

The carbon coating layer may be present in an amount of 0.5-10.0 wt%, particularly 1-8 wt%, or 2-6 wt%, based on the total weight of the second negative electrode active material. When the above-defined range is satisfied, it is possible to improve the quick charging performance of an artificial graphite, while ensuring the capacity per unit weight of the negative electrode active material particles.

The first negative electrode active material, i.e. an artificial graphite having no carbon coating layer on the surface thereof, may have a D50 of 5-35 $\mu$m, particularly 7-33 $\mu$m, and more particularly, 10-30 $\mu$m.

The second negative electrode active material, i.e. an artificial graphite having a carbon coating layer on the surface thereof, may have a D50 of 4-32 $\mu$m, particularly 6-30 $\mu$m, and more particularly, 8-28 $\mu$m or 8-21 $\mu$m.

According to an embodiment of the present disclosure, the weight ratio of the first negative electrode active material to the second negative electrode active material may be 1:99-99:1, 20:80-80:20, 30:70-70:30, 30:70-50:50, or 50:50-70:30. When the weight ratio of the first negative electrode active material to the second negative electrode active material satisfies the above-defined range, cell diffusion resistance may be reduced advantageously.

According to an embodiment of the present disclosure, the negative electrode active material layer may be a single layer including the first negative electrode active material and the second negative electrode active material.

According to another embodiment of the present disclosure, the negative electrode active material layer may be a dual layer including a lower layer region containing the first negative electrode active material, and an upper layer region disposed on the lower layer region and containing the second negative electrode active material.

When the negative electrode active material layer is a dual layer, the first negative electrode active material contained in the lower layer region of the negative electrode and the second negative electrode active material contained in the upper layer region of the negative electrode are different from each other in terms of type/shape, and thus an intermixing region in which such different types of active materials are mixed may be present at the portion where the lower layer region is in contact with the upper layer region. This is because when a slurry for a lower layer containing the first active material and a slurry for an upper layer containing the second active material are coated at the same time or continuously with a very short time interval, and then dried at the same time to form a negative electrode active material layer, a certain intermixing zone is generated at the interface where the slurry for a lower layer is in contact with the slurry for an upper layer before drying, and then the intermixing zone is formed in the shape of a layer of intermixing region, while the slurry for a lower layer and the slurry for an upper layer are dried subsequently.

According to an embodiment of the present disclosure, the weight ratio (or loading amount per unit area) of the lower layer region to the upper layer region of the active material layer may be 20:80-80:20, particularly 30:70-70:30. When the above-defined range of weight ratio is satisfied, it is possible to realize high adhesion and excellent quick charging performance.

According to an embodiment of the present disclosure, the thickness ratio of the lower layer region to the upper layer region of the active material layer may be 20:80-80:20, particularly 30:70-70:30. When the above-defined range of thickness ratio is satisfied, it is possible to realize high adhesion and excellent quick charging performance.

According to an embodiment of the present disclosure, the total thickness of the negative electrode active material layer is not particularly limited. For example, the total thickness of the negative electrode active material layer may be 40-200 $\mu$m. In addition, the lower layer region of the active material layer may have a thickness of 20-150 $\mu$m, or 30-100 $\mu$m, and the upper layer region of the active material layer may have a thickness of 20-150 $\mu$m, or 30-100 $\mu$m.

Herein, when the thickness ratio of the lower layer region to the upper layer region satisfies the above-defined range, quick charging performance is improved advantageously.

According to an embodiment of the present disclosure, the negative electrode current collector used as a substrate for forming the negative electrode active material layer is not particularly limited, as long as it has conductivity, while not causing any chemical change in the corresponding battery. For example, copper, stainless steel, aluminum, nickel, titanium, baked carbon, copper or stainless steel surface-treated with carbon, nickel, titanium, silver, etc., aluminum-cadmium alloy, or the like, may be used.

Although the current collector is not particularly limited in its thickness, it may have a currently used thickness of 3-500 $\mu$m.

Particular examples of each of the binder polymer contained in the negative electrode active material layer may include various types of polymers, such as polyvinylidene fluoride-co-hexafluoropropylene (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, styrene butadiene rubber (SBR), fluoro-rubber, various copolymers, or the like. When the negative electrode active material layer is a dual layer, the same binder polymer or a different binder polymer may be used for each layer.

The negative electrode active material layer according to the present disclosure may further include a thickener, and particular examples of the thickener may include carboxymethyl cellulose (CMC), carboxyethyl cellulose, polyvinyl pyrrolidone, or the like. When the negative electrode active material layer is a dual layer, the same thickener or a different thickener may be used for each layer.

Optionally, the active material layer may further include a conductive material. The conductive material is not particularly limited, as long as it has conductivity, while causing no chemical change in the corresponding battery. Particular examples of the conductive material include: carbon black, such as carbon black, acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; and conductive materials, such as polyphenylene derivatives. When the negative electrode active material layer is a dual layer, the same conductive material or a different conductive material may be used for each layer.

In another aspect of the present disclosure, when the negative electrode has a single layer structure, it may be obtained by preparing a slurry containing a first negative electrode active material, a second negative electrode active material, a binder polymer and a dispersion medium, and coating and drying the slurry on a negative electrode current collector.

In addition, when the negative electrode has a dual layer structure, it may be obtained by the method including the steps of:

preparing a slurry for a lower layer containing a first negative electrode active material, a first binder polymer and a first dispersion medium, and a slurry for an upper layer containing a second negative electrode active material, a second binder polymer and a second dispersion medium;

coating the slurry for a lower layer on one surface of a negative electrode current collector, and coating the slurry for an upper layer on the slurry for a lower layer; and

drying the coated slurry for a lower layer and the coated slurry for an upper layer at the same time to form an active material layer.

The active material (the first negative electrode active material, the second negative electrode active material), the binder polymer (the first binder polymer, the second binder polymer), an optionally used thickener (a first thickener, a second thickener), the conductive material, or the like, are the same as described above.

Each dispersion medium (the first dispersion medium, the second dispersion medium) may independently include N-methyl pyrrolidone, acetone, water, or the like.

Herein, the lower layer region of the negative electrode active material layer according to the present disclosure is formed from the coated slurry for a lower layer, and the upper layer region of the negative electrode active material layer according to the present disclosure is formed from the coated slurry for an upper layer.

According to an embodiment of the present disclosure, the slurry for a lower layer may be coated, and the slurry for an upper layer may be coated on the slurry for a lower layer at the same time or with a predetermined interval, wherein a device, such as a double slot die, may be used.

The step of drying the coated slurry for a lower layer and the coated slurry for an upper layer at the same time to form an active material layer may include drying the coated slurry for a lower layer and the coated slurry for an upper layer at the same time to remove the dispersion medium in each slurry, carrying out pressing, and carrying out vacuum drying to form an active material layer.

Herein, the pressing may be carried out by using a method, such as roll pressing, used conventionally in the art. For example, the pressing may be carried out under a pressure of 1-20 MPa at a temperature of 15-30°C. In addition, the pressing may be carried out in such a manner that the electrode (the active material layer) may have a porosity of 20-40%, 25-35%, 20-30%, or 30-40%, after pressing.

For example, the step of drying the coated slurry may be carried out at 70-90°C, 75-85°C, or 80-85°C, for 10-30 minutes, 15-25 minutes, or 20-30 minutes, but the drying temperature and time may be controlled suitably depending on the type and content of the dispersion medium.

In addition, after pressing the dried slurry layer, vacuum drying may be carried out at a temperature of 100-170°C, 120-150°C, or 130-150°C, for about 3-10 hours, or 5-8 hours, but the drying temperature and time may be controlled suitably depending on the type and content of the dispersion medium.

The negative electrode active material layer may have a total ratio (wt%) of the binder polymer of 1-3 wt%, 1-2 wt%, or 2-3 wt%.

When the negative electrode active material layer has a dual layer structure, the ratio of the weight percentage (wt%) of the first binder polymer in the lower layer region to the weight percentage (wt%) of the second binder polymer in the upper layer region may be 1-5, 1.2-4. 1.5-3, or 2.1-3.

Herein, when the ratio of the weight percentage (wt%) of the first binder polymer in the lower layer region to the weight percentage (wt%) of the second binder polymer in the upper layer region satisfies the above-defined range, it is possible to realize excellent adhesion and quick charging performance.

The weight percentage (wt%) of the first binder polymer in the lower layer region may be 2-4 wt%, or 2.3-3 wt%, and the weight percentage (wt%) of the second binder polymer in the upper layer region may be 0.5-2 wt%, or 1-1.7 wt%.

The positive electrode may be obtained by mixing a positive electrode active material, a conductive material, a binder and a solvent to form a slurry, and coating the slurry directly onto a metal current collector, or casting the slurry onto a separate support, peeling a positive electrode active material film from the support and laminating the film on a metal current collector.

The positive electrode active material is $LiCoO_2$ (lithium cobalt oxide), which has a bimodal shape of average particle diameter distribution including two types of particles having a different average particle diameter, includes 5000 ppm or more of Al doping, and is surface coated with Zr.

When using a lithium cobalt oxide as a positive electrode active material at a high voltage, a large amount of lithium ions are released from lithium cobalt oxide particles to generate defects in the crystal structure, resulting in the problem of collapse of the non-stabilized crystal structure and degradation of reversibility. In addition, when $Co^{3+}$ or $Co^{4+}$ ions present on the surfaces of lithium cobalt oxide particles from which lithium ions are released are reduced by an electrolyte, oxygen is deintercalated from the crystal structure to accelerate such collapse of structure.

Therefore, in order to use a lithium cobalt oxide stably at a high voltage, the crystal structure should be retained stably and side reactions of Co ions with the electrolyte should be inhibited, even though a large amount of lithium ions are released.

Therefore, according to the present disclosure, the positive electrode active material is prepared by forming a Zr-containing coating layer on the surfaces of lithium cobalt oxide particles and incorporating Al doping into a lithium cobalt oxide. In this manner, the dopant Al doped to a lithium cobalt oxide and Zr contained in the coating layer are oxidized preferentially to cobalt (Co) under a charge condition at 4.4 V or higher to retain the internal structure of the positive electrode active material particles stably and to inhibit a change in surface structure of the positive electrode active material, thereby enhancing surface stability. As a result, it is possible to prevent degradation of the cycle characteristics of a secondary battery at a high voltage, effectively.

According to an embodiment of the present disclosure, the lithium cobalt oxide may have a composition represented by the following Chemical Formula 1:

[Chemical Formula 1] $\qquad$ $Li_aAl_bZr_cCo_{1-(b+c)}O_2$

wherein

$$0.95 \leq a \leq 1.05;$$

$$0 < b \leq 0.2;$$

and

$$0 \leq c \leq 0.2.$$

The content of Al doped to the lithium cobalt oxide may be 1,000-10,000 ppm, 2,000-9,000 ppm, 3,000-8,000 ppm, or 5,000-7,000 ppm, based on the total weight of the lithium cobalt oxide. When the Al content satisfies the above-defined range, it is possible to ensure the internal structure stability of the lithium cobalt oxide active material and to improve the cycle characteristics of a secondary battery using the active material.

In addition, the content of Zr coated on the surface of lithium cobalt oxide may be 1-5,000 ppm, 100-3,000 ppm, 300-1,000 ppm, 500-800 ppm, or 500-700 ppm, based on the total weight of the lithium cobalt oxide. When the Zr content satisfies the above-defined range, it is possible to ensure the surface structural stability of the lithium cobalt oxide active material and to improve the cycle characteristics of a secondary battery using the active material.

According to the present disclosure, the content of Al and Zr contained in the lithium cobalt oxide may be determined by using an electron probe microanalyzer (EPMA), an inductively coupled plasma-atomic emission spectrometer (ICP-AES), or the like.

The lithium cobalt oxide has a bimodal shape of average particle diameter distribution including large particles and small particles having a different average particle diameter (D50).

According to an embodiment of the present disclosure, the large particles may have an average particle diameter which is 3-30 times or 5-10 times larger than the average particle diameter of the small particles.

According to an embodiment of the present disclosure, the large particles may have an average particle diameter of 11-30 $\mu$m or 15-25 $\mu$m, and the small particles may have an average particle diameter of 1-10 $\mu$m or 2-9 $\mu$m.

When the large particles and the small particles satisfy the above-defined average particle diameter ranges, it is possible to increase the packing density of the positive electrode.

In addition, the weight ratio of the large particles to the small particles may be 99:1-50:50, 90:10-70:30, or 90:10-80:20. When the weight ratio of the large particles to the small particles satisfies the above-defined range, it is possible to increase the packing density of the positive electrode and to improve cell energy density (energy density of a secondary battery).

Herein, 'D50' means a particle diameter corresponding to 50% of the accumulated particle number distribution depending on particle diameter.

In addition, D50 may be determined by using a laser diffraction method. Particularly, a powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then particle size distribution is calculated. Then, the particle diameter at a point of 50% of the accumulated particle number distribution depending on particle diameter may be calculated to determine D50.

According to an embodiment of the present disclosure, the positive electrode active material may be obtained by the method including the steps of:

(a) mixing a lithium precursor, a cobalt oxide and an Al-containing doping precursor, and primarily firing the resultant mixture to prepare a spherical lithium cobalt oxide; and
(b) mixing the lithium cobalt oxide obtained from step (a) with a Zr-containing compound, and carrying out secondary firing.

In other words, in step (a), an adequate amount of Al-containing doping precursor is mixed, and firing is carried out primarily to prepare Al-doped lithium cobalt oxide particles, a Zr-containing compound is applied to the surfaces of the Al-doped lithium cobalt oxide particles, and then secondary firing is carried out to obtain a positive electrode active material having a coating layer formed thereon.

First, the lithium precursor, the cobalt oxide and the Al-containing doping precursor are mixed to prepare the positive electrode active material.

According to an embodiment of the present disclosure, the lithium (Li) precursor and the cobalt (Co) oxide may be mixed at a molar ratio of 1:1-1.05:1. In addition, the content of the Al-containing doping precursor may be 1,000-10,000 ppm, 2,000-9,000 ppm, 3,000-8,000 ppm, or 5,000-7,000 ppm, based on the total weight of the lithium (Li) precursor and cobalt (Co) oxide.

For example, the cobalt oxide is not limited to any particular type, but may be at least one selected from the group consisting of $Co_3O_4$, $CoCO_3$, $Co(NO_3)_2$ and $Co(OH)_2$, preferably.

The lithium precursor is not particularly limited, as long as it is a compound containing a lithium source. For example, the lithium precursor may be at least one selected from the group consisting of $Li_2CO_3$, $LiOH$, $LiNO_3$, $CH_3COOLi$ and $Li_2(COO)_2$, preferably.

In addition, the Al-containing doping precursor may be at least one selected from the group consisting of metals, metal oxides and metal salts. For example, the metal salts may include acetate, nitrate and sulfate of metal Al, but are not limited thereto.

Then, the mixture containing the lithium precursor, the cobalt oxide and the Al-containing doping precursor is fired primarily to prepare a spherical lithium cobalt oxide.

The primary firing step may be carried out at 800-1,200°C for 8-12 hours.

Then, the primary firing product, i.e. lithium cobalt oxide, is mixed with the Zr-containing compound, and secondary firing is further carried out.

For example, the Zr-containing compound for forming a coating layer may include $ZrO_2$, $ZrO$, $Li_2ZrO_3$, or two or more of them, but is not limited thereto.

According to an embodiment of the present disclosure, the Zr-containing compound may be added in an amount of 1-5,000 ppm, 100-3,000 ppm, 300-1,000 ppm, 500-800 ppm, or 700-800 ppm, based on the weight of the product of the primary firing step.

The secondary firing step may be carried out at 400-800°C for 3-8 hours.

After the secondary firing, the lithium cobalt oxide, i.e. two types of Al-doped and Zr-surface coated lithium cobalt oxide particles having a different average particle diameter are mixed to obtain the positive electrode active material according to an embodiment of the present disclosure.

According to an embodiment of the present disclosure, the two types of lithium cobalt oxide particles having a different average particle diameter may be obtained by controlling the starting materials used for preparing the lithium cobalt oxide to have a different average particle diameter.

For example, two types of cobalt oxide particles having a different average particle diameter may be used to obtain two types of lithium cobalt oxide particles having a different average particle diameter. In other words, the large particles of lithium cobalt oxide having a large average particle diameter are derived from large particles of cobalt oxide having a large average particle diameter, and the small particles of lithium cobalt oxide having a small average particle diameter are derived from small particles of cobalt oxide having a small average particle diameter.

In general, the positive electrode current collector has a thickness of 3-300 $\mu$m, and is not particularly limited, as long as it causes no chemical change in the corresponding battery and has high conductivity. Particular examples of the positive electrode current collector may include at least one selected from stainless steel, aluminum, nickel, titanium, baked carbon, aluminum or stainless steel surface-treated with carbon, nickel, titanium or silver, or the like. Particularly, aluminum may be used. The current collector may have fine surface irregularities on the surface thereof to enhance the adhesion, and may be provided in various shapes, such as a film, a sheet, a foil, a net, a porous body, a foam, a nonwoven web, or the like.

Meanwhile, the conductive material, the binder and the solvent may be selected suitably from those exemplified hereinabove with reference to the negative electrode.

According to the present disclosure, an artificial graphite and a lithium cobalt oxide ($LiCoO_2$), used conventionally as a typical negative electrode active material and positive electrode active material, respectively, are used, with the proviso that a negative electrode using a non-coated artificial graphite in combination with a carbon-coated artificial graphite as a negative electrode active material, and a positive electrode including a positive electrode active material containing a lithium cobalt oxide doped with a predetermined amount of Al and coated with Zr and having a bimodal-type particle diameter distribution with different average particle diameters are provided at the same time in order to improve the problems of such conventional electrode active materials. As a result, in the secondary battery including the negative electrode and the positive electrode at the same time according to the present disclosure, Al is intercalated into the lithium cobalt oxide in the positive electrode active material so that it may be substituted with Co or Li ion. In this manner, the structural stability of the positive electrode may be improved, and resistance may be reduced upon the conduction of lithium ions, resulting in significant improvement of life characteristics. In addition, a carbon-coated artificial graphite is also used to provide a secondary battery with excellent quick charging performance.

The separator may be a conventional porous polymer film used conventionally as a separator. For example, the porous polymer film may be a porous polymer film made of a polyolefinic polymer, such as ethylene homopolymer, propylene homopolymer, ethylene-butene copolymer, ethylene/hexene copolymer or ethylene/methacrylate copolymer. Such a porous polymer film may be used alone or in the form of a laminate. In addition, an insulating thin film having high ion permeability and mechanical strength may be used. The separator may include a safety reinforced separator (SRS) including a ceramic material coated on the surface of the separator to a small thickness. In addition, a conventional porous non-woven web, such as non-woven web made of high-melting point glass fibers or polyethylene terephthalate fibers, may be used, but the scope of the present disclosure is not limited thereto.

The electrolyte includes a lithium salt as an electrolyte salt and an organic solvent for dissolving the lithium salt.

Any lithium salt used conventionally for an electrolyte for a secondary battery may be used with no particular limitation. For example, the anion of the lithium salt may be any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

The organic solvent contained in the electrolyte may be any organic solvent used conventionally without particular limitation. Typical examples of the organic solvent include at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulforan, gamma-butyrolactone, propylene sulfite, and tetrahydrofuran.

Particularly, among the carbonate-based organic solvents, ethylene carbonate and propylene carbonate, which are cyclic carbonates, are organic solvents having high viscosity and a high dielectric constant, and thus may be used preferably, since they can dissociate the lithium salt in the electrolyte with ease. When such a cyclic carbonate is used after mixing it with a linear carbonate having low viscosity and a low dielectric constant, such as dimethyl carbonate or diethyl carbonate, it is possible to prepare an electrolyte having higher electrical conductivity, more preferably.

Optionally, the electrolyte used according to the present disclosure may further include additives contained in the conventional electrolyte, such as an overcharge-preventing agent, or the like.

The lithium secondary battery according to an embodiment of the present disclosure may be obtained by interposing the separator between the positive electrode and the negative electrode to form an electrode assembly, introducing the electrode assembly to a pouch, a cylindrical battery casing or a prismatic battery casing, and then injecting the electrolyte thereto to finish a secondary battery. In a variant, the lithium secondary battery may be obtained by stacking the electrode assemblies, impregnating the stack with the electrolyte, and introducing the resultant product to a battery casing, followed by sealing.

According to an embodiment of the present disclosure, the lithium secondary battery may be a stacked, wound, stacked and folded or cable type battery.

The lithium secondary battery according to the present disclosure may be used for a battery cell used as a power source for a compact device, and may be used preferably as a unit battery for a medium- or large-size battery module including a plurality of battery cells. Particular examples of such medium- or large-size devices include electric vehicles, hybrid electric vehicles, plug-in hybrid electric vehicles, power storage systems, or the like. Particularly, the lithium secondary battery may be useful for batteries for hybrid electric vehicles and new & renewable energy storage batteries, requiring high output.

MODE FOR DISCLOSURE

Examples will be described more fully hereinafter so that the present disclosure can be understood with ease.

Example 1: Manufacture of Secondary Battery

<Manufacture of Negative Electrode>

First, prepared were a first negative electrode active material including an artificial graphite present as secondary particles formed by granulation of primary particles of artificial graphite and having no carbon coating layer, and a second negative electrode active material including an artificial graphite present as secondary particles formed by granulation of primary particles of artificial graphite and having a carbon coating layer thereon. Herein, the primary particles have a D50 of 10 $\mu$m, and the first negative electrode active material, i.e. artificial graphite present as secondary particles formed by granulation of the primary particles has an average particle diameter (D50) of 20 $\mu$m. The carbon coating layer on the secondary particles in the second negative electrode active material is present in an amount of 4.0 wt% based on the total weight of the second negative electrode active material. Herein, the second negative electrode active material has an average particle diameter (D50) of 21 $\mu$m.

The first negative electrode active material, the second negative electrode active material, Super C65 as a conductive material, styrene butadiene rubber (SBR) as a binder polymer and carboxymethyl cellulose (CMC) as a thickener were mixed at a weight ratio of 48:48:1:2:1, and water was added thereto to prepare a slurry.

The slurry was applied onto one surface of copper (Cu) foil having a thickness of 10 $\mu$m as a negative electrode current collector at a loading amount of 5 mAh/cm$^2$. The current collector coated with the slurry was vacuum dried at about 130°C for 8 hours and pressed to a porosity of 30%. In this manner, a single layer structured negative electrode was obtained.

<Manufacture of Positive Electrode>

As a positive electrode active material, prepared was a lithium cobalt oxide having a bimodal shape of average particle diameter distribution including large particles having an average particle diameter (D50) of 16 $\mu$m and small particles having an average particle diameter (D50) of 8 $\mu$m, containing 5,000 ppm of Al doping and surface-coated with 700 ppm of Zr. Herein, the weight ratio of the large particles to the small particles was 80:20.

Herein, the content of Al and Zr contained in the lithium cobalt oxide was determined by using an inductively coupled plasma-atomic emission spectrometer (ICP-AES).

The positive electrode active material, polyvinylidene fluoride (PVDF) as a binder and a natural graphite as a conductive material were mixed in N-methyl pyrrolidone (NMP) at a weight ratio of 96:2:2, the resultant mixture was applied to Al foil having a thickness of 20 $\mu$m at a loading amount of 5 mAh/cm$^2$ and vacuum dried at about 130°C for 8 hours, and then pressing was carried out to a porosity of 30% to obtain a positive electrode.

<Manufacture of Lithium Secondary Battery>

An electrolyte was prepared by dissolving LiPF$_6$ in a mixed organic solvent containing ethylene carbonate (EC), propylene carbonate (PC) and diethyl carbonate (DEC) at a volume ratio of 3:3:4 to a concentration of 1.0 M.

A porous polyethylene separator was interposed between the positive electrode and the negative electrode obtained as described above, and the electrolyte was injected thereto to obtain a lithium secondary battery.

Comparative Example 1: Manufacture of Secondary Battery

A negative electrode, a positive electrode and a secondary battery were obtained in the same manner as Example 1, except that a first negative electrode active material including an artificial graphite present as secondary particles formed by granulation of primary particles of artificial graphite and having no carbon coating layer, Super C65 as a conductive material, styrene butadiene rubber (SBR) as a binder polymer, and carboxymethyl cellulose (CMC) as a thickener were mixed at a weight ratio of 96:1:2:1, and water was added thereto to prepare a slurry.

Comparative Example 2: Manufacture of Secondary Battery

A negative electrode, a positive electrode and a secondary battery were obtained in the same manner as Example 1, except that a lithium cobalt oxide containing no Al doping and not surface-coated with Zr was used as a positive electrode active material.

Example 2: Manufacture of Secondary Battery

<Manufacture of Negative Electrode>

The first negative electrode active material used in Example 1, Super C65 as a conductive material, styrene butadiene rubber (SBR) as a first binder polymer and carboxymethyl cellulose (CMC) as a thickener were mixed at a weight ratio of 95:1:1:3, and water was added thereto to prepare a slurry for a lower layer.

The second negative electrode active material used in Example 1, Super C65 as a conductive material, styrene butadiene rubber (SBR) as a second binder polymer and carboxymethyl cellulose (CMC) as a thickener were mixed at a weight ratio of 97:1:1:1, and water was added thereto to prepare a slurry for an upper layer.

The slurry for a lower layer was applied onto one surface of copper (Cu) foil having a thickness of 10 $\mu$m as a negative electrode current collector at a loading amount of 2.5 mAh/cm$^2$, and then the slurry for an upper layer was applied onto the coated slurry for a lower layer at a loading amount of 2.5 mAh/cm$^2$. The current collector coated with the slurry was dried at 80°C for 20 minutes to remove water from the slurry, and the dried slurry layers were pressed and vacuum dried at about 130°C for 8 hours to obtain a negative electrode. Herein, the resultant negative electrode had an active material layer having a porosity of 30%, a dual layer structure including an upper layer region with a thickness of 50 $\mu$m and a lower layer region with a thickness of 50 $\mu$m, and a total thickness of 100 $\mu$m.

A positive electrode and a secondary battery were obtained in the same manner as Example 1, except that the negative electrode obtained as described above was used.

Comparative Example 3: Manufacture of Secondary Battery

A negative electrode, a positive electrode and a secondary battery were obtained in the same manner as Example 2, except that a lithium cobalt oxide containing no Al doping and not surface-coated with Zr was used as a positive electrode active material.

Comparative Example 4: Manufacture of Secondary Battery

A negative electrode, a positive electrode and a secondary battery were obtained in the same manner as Example 2, except that the first negative electrode active material (including artificial graphite present as secondary particles formed by granulation of primary particles of artificial graphite and having no carbon coating layer) according to Example 1 was used for both the slurry for a lower layer and the slurry for an upper layer.

Evaluation of Characteristics of Secondary Battery

Test Example 1: Evaluation of Life Characteristics of Battery

Each of the lithium secondary batteries according to Example 1 and Comparative Examples 1 and 2 was charged/discharged initially (1$^{st}$ cycle) by using an electrochemical charger. Herein, each secondary battery was charged to a voltage of 4.47 V by applying electric current at a current density of 1.5 C-rate, and discharged to 3.0 V at the same current density. Such charge/discharge cycles were carried out 1,000 times.

During the charge/discharge cycles, the voltage and capacity of the positive electrode and negative electrode contained in each battery were determined.

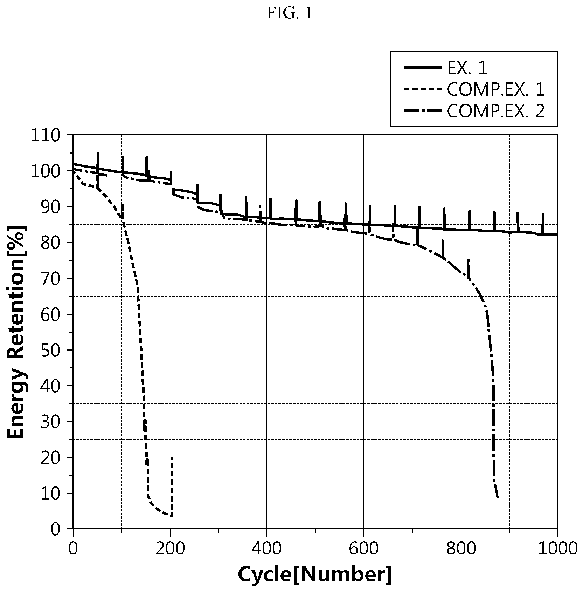

After that, the capacity retention of each battery was calculated according to the following formula. The results are shown in FIG. 1.

$$\text{Capacity retention (\%)} = (\text{Capacity at each cycle/Initial capacity}) \times 100$$

Referring to FIG. 1, it can be seen that the lithium secondary battery of Example 1 according to an embodiment of the present disclosure shows a significantly high capacity retention of 80% or more, even after being charged/discharged 1,000 times, as compared to the lithium secondary batteries according to Comparative Examples 1 and 2.

Each of the lithium secondary batteries according to Example 2 and Comparative Examples 3 and 4 was charged/discharged initially (1$^{st}$ cycle) by using an electrochemical charger. Herein, each secondary battery was charged to a voltage of 4.47 V by applying electric current at a current density of 1.5 C-rate, and discharged to 3.0 V at the same current density. Such charge/discharge cycles were carried out 700 times.

During the charge/discharge cycles, the voltage and capacity of the positive electrode and negative electrode contained in each battery were determined.

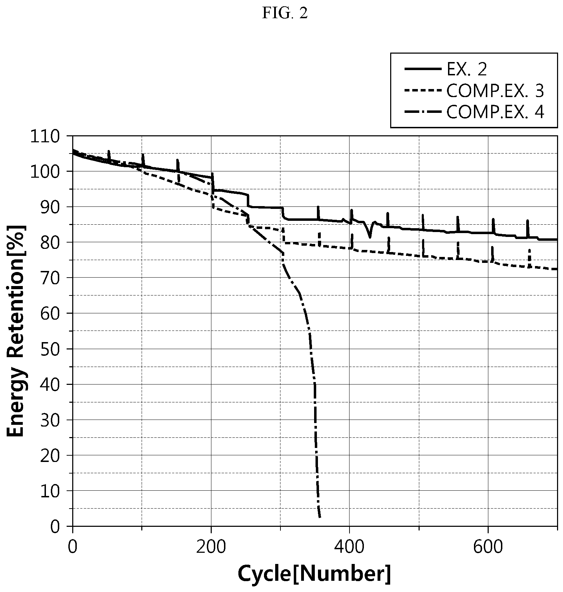

After that, the capacity retention of each battery was calculated according to the following formula. The results are shown in FIG. 2.

$$\text{Capacity retention (\%)} = (\text{Capacity at each cycle/Initial capacity}) \times 100$$

Referring to FIG. 2, it can be seen that the lithium secondary battery of Example 2 according to an embodiment of the present disclosure shows a significantly high capacity retention of 80% or more, even after being charged/discharged 700 times, as compared to the lithium secondary batteries according to Comparative Examples 3 and 4.

## Claims

1. A secondary battery comprising a positive electrode, a negative electrode and a separator interposed between the positive electrode and the negative electrode,

   wherein the positive electrode comprises a positive electrode current collector, and a positive electrode active material layer disposed on the positive electrode current collector and containing a positive electrode active material and a binder,
   the positive electrode active material comprises a lithium cobalt oxide,
   the lithium cobalt oxide has a bimodal shape of average particle diameter distribution including two types of particles having a different average particle diameter,
   the lithium cobalt oxide comprises Al doping and is surface-coated with Zr,
   the negative electrode comprises a negative electrode current collector, and a negative electrode active material layer disposed on the negative electrode current collector and containing a negative electrode active material and a binder, and
   the negative electrode active material comprises a first negative electrode active material that is an artificial graphite having no carbon coating layer on the surface thereof, and a second negative electrode active material that is an artificial graphite having a carbon coating layer on the surface thereof.

2. The secondary battery according to claim 1, wherein the lithium cobalt oxide comprises large particles having an average particle diameter of 11-30 $\mu$m and small particles having an average particle diameter of 1-10 $\mu$m as determined by a laser diffraction method.

3. The secondary battery according to claim 1, wherein the content of Al doped to the lithium cobalt oxide is 1,000-10,000 ppm.

4. The secondary battery according to claim 1, wherein the content of Zr coated on the surface of the lithium cobalt oxide is 1-5,000 ppm.

5. The secondary battery according to claim 1, wherein the weight ratio of the first negative electrode active material to the second negative electrode active material is 1:99-99:1.

6. The secondary battery according to claim 1, wherein the negative electrode active material layer is a single layer comprising the first negative electrode active material and the second negative electrode active material.

7. The secondary battery according to claim 1, wherein the negative electrode active material layer is a dual layer comprising a lower layer region containing the first negative electrode active material, and an upper layer region disposed on the lower layer region and containing the second negative electrode active material.

8. The secondary battery according to claim 1, wherein the carbon coating layer is present in an amount of 0.5-10.0 wt% based on the total weight of artificial graphite having the carbon coating layer.

## Patentansprüche

1. Sekundärbatterie, umfassend eine positive Elektrode, eine negative Elektrode und einen zwischen der positiven Elektrode und der negativen Elektrode angeordneten Separator,

wobei die positive Elektrode einen Positivelektrodenstromkollektor und eine Positivelektrodenaktivmaterialschicht, die auf dem Positivelektrodenstromkollektor angeordnet ist und ein Positivelektrodenaktivmaterial und ein Bindemittel enthält, umfasst,

das Positivelektrodenaktivmaterial ein Lithium-Cobalt-Oxid umfasst,

das Lithium-Cobalt-Oxid eine bimodale Form der durchschnittlichen Partikeldurchmesserverteilung aufweist, die zwei Arten von Partikeln mit unterschiedlichem durchschnittlichem Partikeldurchmesser umfasst,

das Lithium-Cobalt-Oxid eine Al-Dotierung umfasst und mit Zr oberflächenbeschichtet ist,

die negative Elektrode einen Negativelektrodenstromkollektor und eine Negativelektrodenaktivmaterialschicht, die auf dem Negativelektrodenstromkollektor angeordnet ist und ein Negativelektrodenaktivmaterial und ein Bindemittel enthält, umfasst, und

das Negativelektrodenaktivmaterial ein erstes Negativelektrodenaktivmaterial, das ein künstlicher Graphit ohne Kohlenstoffbeschichtungsschicht auf der Oberfläche davon ist, und ein zweites Negativelektrodenaktivmaterial, das ein künstlicher Graphit mit einer Kohlenstoffbeschichtungsschicht auf der Oberfläche davon ist, umfasst.

2. Sekundärbatterie gemäß Anspruch 1, wobei das Lithium-Cobalt-Oxid große Partikel mit einem durchschnittlichen Partikeldurchmesser von 11-30 $\mu$m und kleine Partikel mit einem durchschnittlichen Partikeldurchmesser von 1-10 $\mu$m, bestimmt durch ein Laserbeugungsverfahren, umfasst.

3. Sekundärbatterie gemäß Anspruch 1, wobei der Gehalt an Al, das dem Lithium-Cobalt-Oxid dotiert ist, 1.000-10.000 ppm beträgt.

4. Sekundärbatterie gemäß Anspruch 1, wobei der Gehalt an Zr, das auf die Oberfläche des Lithium-Cobalt-Oxids geschichtet ist, 1-5.000 ppm beträgt.

5. Sekundärbatterie gemäß Anspruch 1, wobei das Gewichtsverhältnis von dem ersten Negativelektrodenaktivmaterial zu dem zweiten Negativelektrodenaktivmaterial 1:99-99:1 beträgt.

6. Sekundärbatterie gemäß Anspruch 1, wobei die Negativelektrodenaktivmaterialschicht eine einzelne Schicht ist, die das erste Negativelektrodenaktivmaterial und das zweite Negativelektrodenaktivmaterial umfasst.

7. Sekundärbatterie gemäß Anspruch 1, wobei die Negativelektrodenaktivmaterialschicht eine Doppelschicht ist, die einen unteren Schichtbereich, enthaltend das erste Negativelektrodenaktivmaterial, und einen oberen Schichtbereich, der auf dem unteren Schichtbereich angeordnet ist und das zweite Negativelektrodenaktivmaterial enthält, umfasst.

8. Sekundärbatterie gemäß Anspruch 1, wobei die Kohlenstoffbeschichtungsschicht in einer Menge von 0,5-10,0 Gew.-%, bezogen auf das Gesamtgewicht des künstlichen Graphits mit der Kohlenstoffbeschichtungsschicht, vorhanden ist.

**Revendications**

1. Batterie secondaire au lithium comprenant une électrode positive, une électrode négative et un séparateur interposé entre l'électrode positive et l'électrode négative,

dans lequel l'électrode positive comprend un collecteur de courant d'électrode positive, et une couche de matériau actif d'électrode positive disposée sur le collecteur de courant d'électrode positive et contenant un matériau actif d'électrode positive et un liant,

le matériau actif d'électrode positive comprend un oxyde de lithium-cobalt,

l'oxyde de lithium-cobalt présente une forme bimodale de distribution de diamètre de particule moyen incluant deux types de particules présentant un diamètre moyen de particule différent,

l'oxyde de lithium-cobalt comprend un dopage d'Al et est revêtu en surface de Zr,

l'électrode négative comprend un collecteur de courant d'électrode négative, et une couche de matériau actif d'électrode négative disposée sur le collecteur de courant d'électrode négative et contenant un matériau actif d'électrode négative et un liant, et

le matériau actif d'électrode négative comprend un premier matériau actif d'électrode négative qui est un graphite artificiel ne présentant pas de couche de revêtement de carbone sur sa surface, et un deuxième matériau actif d'électrode négative qui est un graphite artificiel présentant une couche de revêtement de carbone sur sa surface.

**2.** Batterie secondaire au lithium selon la revendication 1, dans lequel l'oxyde de lithium-cobalt comprend de grandes particules présentant un diamètre moyen de particule de 11 à 30 μm et de petites particules présentant un diamètre moyen de particule de 1 à 10 μm tel que déterminé par un procédé de diffraction laser.

**3.** Batterie secondaire au lithium selon la revendication 1, dans laquelle la teneur en Al dopé à l'oxyde de lithium-cobalt est de 1000 à 10 000 ppm.

**4.** Batterie secondaire au lithium selon la revendication 1, dans laquelle la teneur en Zr revêtu sur la surface de l'oxyde de lithium-cobalt est de 1 à 5 000 ppm.

**5.** Batterie secondaire au lithium selon la revendication 1, dans laquelle le rapport pondéral entre le premier matériau actif d'électrode négative et le deuxième matériau actif d'électrode négative est de 1:99- 99:1.

**6.** Batterie secondaire au lithium selon la revendication 1, dans laquelle la couche de matériau actif d'électrode négative est une couche unique comprenant le premier matériau actif d'électrode négative et le deuxième matériau actif d'électrode négative.

**7.** Batterie secondaire au lithium selon la revendication 1, dans laquelle la couche de matériau actif d'électrode négative est une double couche comprenant une région de couche inférieure contenant le premier matériau actif d'électrode négative, et une région de couche supérieure disposée sur la région de couche inférieure et contenant le deuxième matériau actif d'électrode négative.

**8.** Batterie secondaire au lithium selon la revendication 1, dans laquelle la couche de revêtement de carbone est présente en une quantité de 0,5 à 10,0 % en poids sur la base du poids total de graphite artificiel présentant la couche de revêtement de carbone.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101777647 A
- KR 20200092202 A
- KR 20200073801 A
- WO 2016129629 A1